(19) Europäisches Patentamt
European Patent Office
Office européen des brevets

(11) **EP 1 950 132 B1**

(12) **EUROPEAN PATENT SPECIFICATION**

(45) Date of publication and mention
of the grant of the patent:
**04.03.2015 Bulletin 2015/10**

(51) Int Cl.:
***B62M 7/12*** *(2006.01)*

(21) Application number: **08250295.6**

(22) Date of filing: **23.01.2008**

(54) **Vehicle**

Fahrzeug

Véhicule

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **25.01.2007 JP 2007015572**

(43) Date of publication of application:
**30.07.2008 Bulletin 2008/31**

(73) Proprietor: **Yamaha Hatsudoki Kabushiki Kaisha
Iwata-shi, Shizuoka 438-8501 (JP)**

(72) Inventor: **Yamamoto, Yoshiaki
Shizuoka-ken 438-8501 (JP)**

(74) Representative: **Moreland, David et al
Marks & Clerk LLP
Aurora
120 Bothwell Street
Glasgow
G2 7JS (GB)**

(56) References cited:
**EP-A- 0 262 912     EP-A- 1 584 549
FR-A- 2 722 756     US-A- 4 460 057
US-A- 4 733 639     US-A- 4 800 980**

**Description**

FIELD OF THE INVENTION

The present invention relates to a technology for supporting an engine unit by a body frame in a unit swing system straddle-type vehicle.

BACKGROUND TO THE INVENTION

According to a unit swing system straddle-type vehicle (such as a motor scooter), an axle of a rear wheel is supported by the rear end of an engine unit which contains a transmission and an engine, and the engine unit is so constructed as to swing with the rear wheel with the fulcrum located at a pivot shaft suspended by the body frame. Such an arrangement is disclosed in, for example, JP-A-2003-312578. In this reference the area around the intermediate portion of the engine unit in the front-rear direction is attached to the pivot shaft such that the area around the intermediate portion of the engine unit can be supported by the body frame. In this structure, the portion of the engine unit near the center of gravity is supported by the body frame, and thus stable support of the engine unit can be achieved.

According to the straddle-type vehicle shown in JP-A-2003-312578, the pivot shaft as the fulcrum for the swing of the engine unit is attached to the intermediate portion of the engine unit. Thus, the distance between the fulcrum and the axle of the rear wheel during the swing is short. In this case, the rotation angle of the engine unit around the fulcrum becomes large, and the wheelbase (distance between axles of front wheel and rear wheel) easily varies. Accordingly, the wheelbase changes according to the weight of the rider or the road condition, for example, and thus preferable running stability is difficult to be obtained in some cases.

Various other vehicle arrangements are known in the art.

EP1584549 describes a frame structure to which engine hanger brackets are welded. The engine is attached through a suspension link to the rear end of a main pipe of the frame structure in such manner as to pivot together with the rear wheel. The suspension link includes a shock absorbing member and arms. The arms of the suspension link have distal ends connected to an engine supporting portion of the crankcase. The shock absorbing member of the suspension link is connected to the engine hanger bracket of the vehicle body frame.

US4733639 discloses a motorcycle of the scooter type including a body frame to which is pivotally mounted a power unit that includes an engine. The power unit extends to a wheel. The engine unit is mounted to the frame via a suspension link member.

FR2722756 discloses a motor scooter that includes a flange attached to a lateral frame. A front end of a linkage arm is supported on the flange via a pin forming a pivot in order to be able to turn. A rear end of the linkage arm is connected at the front end of an engine.

EP0262912 describes a motorcycle having a rear frame extending longitudinally and centrally through the motorcycle body. A bracket is mounted on the rear side of a lower end of the rear frame, and a swingable power unit comprising an engine and a transmission case has a front portion pivotally joined by a link to the bracket. A rear wheel is rotatably mounted on a rear portion of a transmission case.

US4800980 describes a motor scooter, in which triangular gusset plates are welded to rear rising portions of a pair of down pipes. A power unit is integrally formed with an engine to transmit power of the engine to a rear wheel. The power unit is swingably mounted at its front end through a link to one of the gusset plates.

US4460057 describes a frame to which is mounted a pin. A link is pivotally mounted from the pin. A front end portion of a swing joint that extends behind the frame is pivotally secured via a pin to a lower end portion of the link. Behind the joint, there extends a rear frame supported by a longitudinally extending support shaft. The rear frame carries thereon a power unit comprising an integral combination of an engine, a crankcase and a transmission case.

The invention has been developed to solve the above problems. It is an object of the invention to provide a vehicle capable of obtaining preferable running stability by reducing fluctuations in wheelbase.

SUMMARY OF THE INVENTION

In order to achieve the above object, a straddle-type vehicle according to the invention includes: a body frame; a pivot shaft supported by the body frame; a rear wheel disposed in the rear part of a vehicle body; and an engine unit which contains an engine having a crank shaft and a transmission mechanism for transmitting rotational force of the crank shaft to the rear wheel, and is capable of swinging upward and downward with the rear wheel with the fulcrum located at the pivot shaft. The crank shaft is disposed in the front part of the engine unit. The engine unit has a supported member disposed before the crank shaft and attached to the pivot shaft, and extends toward the rear from the supported member. An axle of the rear wheel is supported by the rear part of the engine unit.

According to the straddle-type vehicle of the invention, the supported member attached to the pivot shaft is disposed before the crank shaft, the distance between the pivot shaft and the axle is larger than that in the structure where the central portion and its vicinity of the engine unit are attached to the pivot shaft. Thus, fluctuation in wheelbase can be reduced, and running stability can be enhanced. The straddle-type vehicle herein is a vehicle such as a motorcycle (including scooter), a four-wheel buggy, and a snow mobile.

According to an example of the invention, the supported member is positioned at the front end of the engine unit. In this case, fluctuation in wheelbase can be further reduced, and running stability can be improved.

In another example of the invention, the supported member attached to the pivot shaft is disposed at a level sufficient for swinging upward and downward from a horizontal surface containing the axle at the time of running of the vehicle. In this case, driving force generated by the rotation of the rear wheel can be transmitted from the supported member to the body frame via the pivot shaft more easily than in the structure where the supported member is disposed considerably away from the axle of the rear wheel in the up-down direction.

In a further aspect of the invention, a shock absorbing unit which reduces vibration of the engine unit is further provided to the straddle-type vehicle. In addition, the shock absorbing unit is disposed in such a position as to expand and contract in the circumferential direction of a circle defined around the pivot shaft. In this case, force in directions other than the expanding and contracting direction of the shock absorbing unit does not easily act on the shock absorbing unit. Thus, the durability of the shock absorbing unit can be increased.

In one aspect of the invention there is provided a vehicle, comprising:

a body frame;
a pivot shaft supported by the body frame; and
an engine unit coupled to a rear wheel and capable of swinging upward and downward about the pivot shaft,

wherein the engine comprises a crank shaft disposed in a front part thereof and a supported member disposed forward of the crank shaft and attached to the pivot shaft, said engine extending rearward from the supported member, and an axle of the rear wheel being supported by the rear part of the engine unit.

It should be understood that the forward position of the support member is with reference to a front-rear direction of the vehicle.

The rear wheel is preferably disposed in a rear part of the vehicle body.

The rear wheel may be coupled to the engine unit via a transmission assembly adapted to transmit rotational force of the crank shaft to the rear wheel.

The supported member may be positioned at the front end of the engine unit.

The supported member attached to the pivot shaft may be disposed at a level sufficient for swinging upward and downward from a horizontal plane containing the axle at the time of running of the vehicle.

The vehicle may further comprise a shock absorbing unit adapted to reduce vibration of the engine unit, wherein the shock absorbing unit may be disposed in such a position as to expand and contract in the circumferential direction of a circle defined around the pivot shaft.

The vehicle may be provided in the form of a straddle-type vehicle

BRIEF DESCRIPTION OF THE DRAWINGS

These and other aspects of the present invention will now be described, by way of example only, with reference to the accompanying drawings, in which:

Fig. 1 is a side view of a motorcycle according to an embodiment of the invention;
Fig. 2 is a side view of a body frame included in the motorcycle;
Fig. 3 is a plan view of the body frame;
Fig. 4 is a side view of an engine unit included in the motorcycle;
Fig. 5 illustrates a pivot support member and a support plate member of the body frame as viewed from the rear;
Fig. 6 is a view explaining a crank mechanism contained in the engine unit;
Fig. 7 is a view explaining a positional relationship between the crank mechanism and a balancer mechanism; and
Fig. 8 is a side view of a body frame and an engine unit included in a motorcycle according to another example of the invention.

DETAILED DESCRIPTION OF THE DRAWINGS

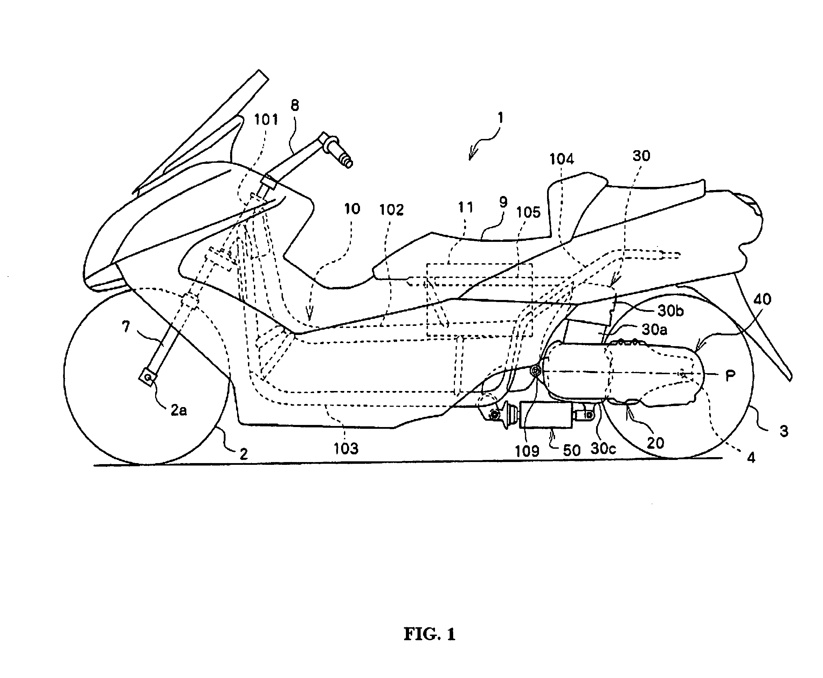

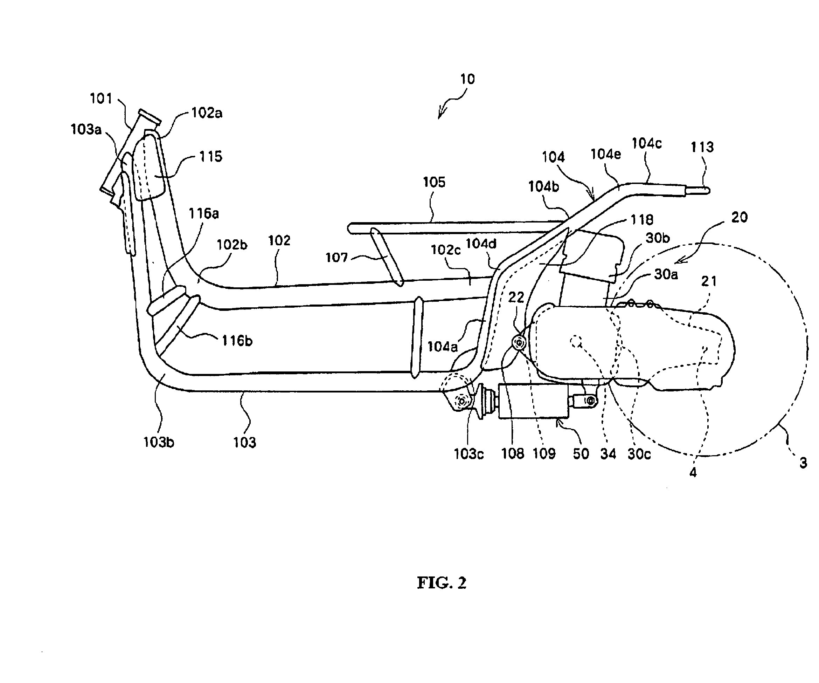

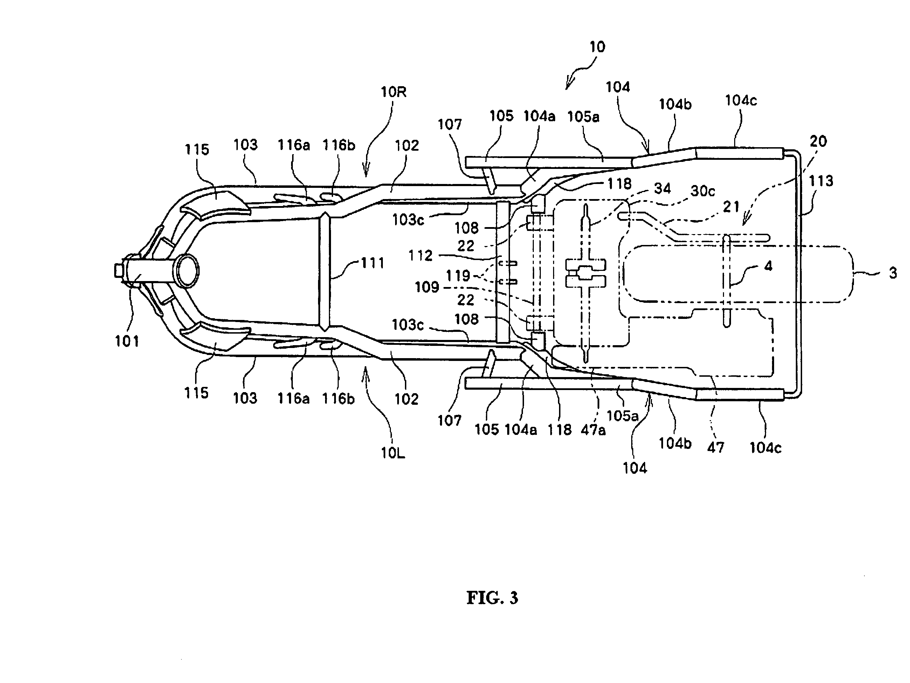

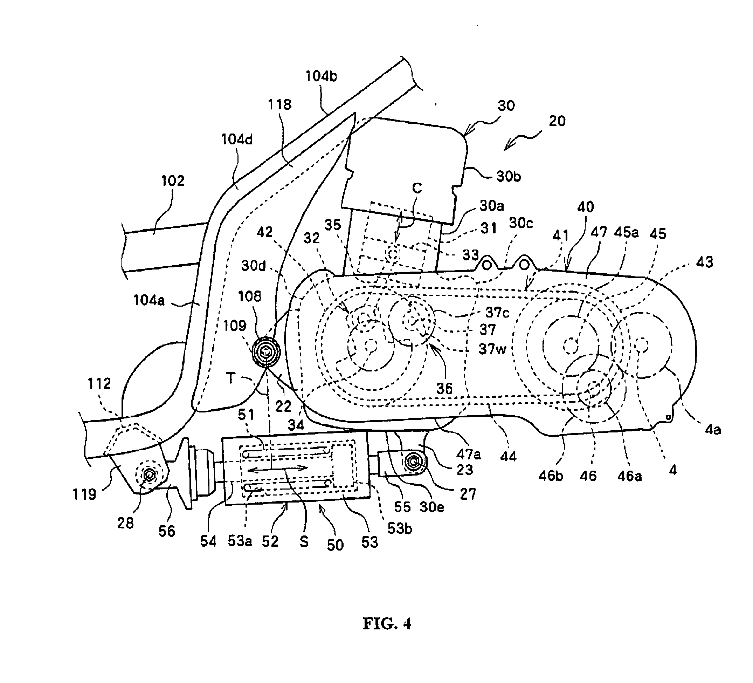

An embodiment according to the invention is hereinafter described with reference to the drawings. Fig. 1 is a side view of a unit swing type motorcycle (motor scooter) 1 according to the embodiment of the invention. Fig. 2 is a side view of a body frame 10 included in the motorcycle 1. Fig. 3 is a plan view of the body frame 10. Fig. 4 is a side view of an engine unit 20. In Fig. 2, the engine unit 20 and a shock absorbing unit or buffer 50 as well as the body frame 10 are shown. In Fig. 3, the engine unit 20 is indicated by an alternate long and two short dashes line.

As illustrated in Fig. 1, the motorcycle 1 includes a front wheel 2, a rear wheel 3, a pivot shaft 109, and the shock absorbing unit 50 as well as the engine unit 20. The front wheel 2 is disposed in the front region of the motorcycle 1, and its axle 2a is supported by the lower end of a front fork 7 diagonally extending in the up-down direction. The upper part of the front fork 7 is rotatably supported by a head pipe 101 of the body frame 10. A handle 8 is connected with the upper end of the front fork 7. The rear wheel 3 is disposed in the rear region of the motorcycle 1. An axle 4 of the rear wheel 3 is rotatably supported by the rear part of the engine unit 20. The rear wheel 3 can swing with the engine unit 20 in the up-down direction relative to the body frame 10.

As illustrated in Fig. 2 or 3, the body frame 10 includes a pair of a right frame 10R and a left frame 10L as well as the head pipe 101. Each of the right frame 10R and the left frame 10L has an upper frame portion 102, a lower frame portion 103, a rear frame portion 104, a seat stay 105, a pivot support member 108, and a support plate member 118. The body frame 10 also includes a front cross portion 111, a shock absorbing unit support portion 112, and a rear cross portion 113 provided between the right frame 10R and the left frame 10L.

As illustrated in Fig. 2, a front end (upper end) 103a of the lower frame portion 103 is connected with the lower part of the head pipe 101. Each of the left and right lower frame portions 103, 103 extends downward and then bends toward the rear at a bend portion 103b while expanding to the side from the front end portion 103a (see Fig. 3) . A rear end 103c of the lower frame 103 bends upward and connects with the rear frame portion 104. As illustrated in Fig. 3, the shock absorbing unit support portion 112 extends between the rear ends 103c of the left and right lower frames 103. The shock absorbing unit support portion 112 extends in the vehicle width direction, and shock absorbing unit attachment members 119 contact with the central portion of the shock absorbing unit support portion 112. In this embodiment, the shock absorbing unit support portion 112 is a component having a substantially C-shaped horizontal cross section. The shock absorbing unit attachment members 119 are a pair of plate-shaped components, and are connected with the inside surface of the shock absorbing unit support portion 112 in such a condition as to project diagonally downward (see Fig. 4) .

As illustrated in Fig. 2, the rear frame portion 104 has a vertical frame portion 104a, an inclined frame portion 104b, and a rearward extending portion 104c. The vertical frame portion 104a extends upward from the rear end 103c of the lower frame portion 103, and an upper end 104d of the vertical frame portion 104a diagonally bends toward the rear of the vehicle body. The inclined frame portion 104b connects with the upper end 104d, and diagonally extends toward the rear of the vehicle body. An upper end 104e of the inclined frame portion 104b bends toward the rear, and the rearward extending portion 104c connects with the upper end 104e. The rear cross portion 113 extends between the left and right rearward extending portions 104c, 104c (see Fig. 3) .

A front end (upper end) 102a of the upper frame portion 102 connects with the upper part of the head pipe 101. The upper frame portion 102 extends downward and bends toward the rear at a bend portion 102b while expanding toward the side from the front end 102a above the lower frame portion 103 (see Fig. 3). The upper frame portion 102 extends toward the rear from the bend portion 102b, and a rear end 102c of the upper frame portion 102 connects with the upper end 104d of the vertical frame portion 104a in the vertical direction. The front cross portion 111 extends between the front parts of the left and right upper frames 102 (see Fig. 3).

The seat stay 105 extends in the front-rear direction of the vehicle body, and a rear end 105a of the seat stay 105 connects with an intermediate portion of the inclined frame portion 104b. As illustrated in Fig. 1, a seat 9 is disposed above the seat stay 105 to be supported by the seat stay 105. A storage case 11 (Fig. 1) is disposed below the seat 9. The storage case 11 is positioned between the left and right seat stays 105 and the upper frame portion 102. As illustrated in Fig. 2, a support member 107 diagonally extending in the up-down direction is provided between the front part of the seat stay 105 and the upper frame portion 102.

As illustrated in Fig. 2, the support plate member 118 connects with the vertical frame portion 104a and the inclined frame portion 104b in such a manner as to extend from the intermediate portion of the inclined frame 104b to the lower end of the vertical frame 104a. The support plate member 118 extends toward the rear of the vehicle body from the vertical frame portion 104a and the inclined frame portion 104b. The lower part of the support plate member 118 supports the pivot support member 108. In this embodiment, the pivot support member 108 is a cylindrical component, and the lower part of the support plate member 118 contacts the outer circumferential surface of the pivot support member 108. The left and right pivot support members 108, 108 support the pivot shaft 109 extending in the vehicle width direction.

A reinforcement plate 115 connects the front end 102a of the upper frame portion 102 and the front end 103a of the lower frame portion 103. Two support members 116a and 116b extend between the bend portion 103b of the lower frame portion 103 and the bend portion 102b of the upper frame portion 102.

As illustrated in Figs. 3 and 4, the engine unit 20 has an engine 30, a transmission mechanism 40 for transmitting driving force outputted from the engine 30 to the rear wheel 3, and a rear arm 21. The engine unit 20 further has a pair of left and right supported members 22, 22 to be attached to the pivot shaft 109, and a shock absorbing unit attachment member 23 to which the shock absorbing unit 50 is attached. As mentioned above, the motorcycle 1 is a unit swing type vehicle. Thus, the axle 4 of the rear wheel 3 is supported on the rear part of the engine unit 20 which can swing upward and downward with the rear wheel 3 with the fulcrum located at the pivot shaft 109.

As illustrated in Fig. 4, the engine 30 includes a cylinder block 30a containing a cylinder 31, a cylinder head 30b covering the upper part of the cylinder block 30a, a crank mechanism 32, a balancer mechanism 36, and a crank case 30c. The crank mechanism 32 has a piston 33, a crank shaft 34, and a connecting rod 35 connecting the crank shaft 34 and the piston 33.

The cylinder block 30a and the cylinder head 30b are positioned such that the axial direction of the cylinder 31 (direction indicated by an arrow C in Fig. 4) extends in the up-down direction of the vehicle body. As illustrated in Fig. 1, the storage case 11 is disposed forward of the cylinder block 30a and the cylinder head 30b. According to the example shown in Fig. 4, the cylinder 31 is slightly inclined toward the rear of the vehicle body. The crank case 30c is disposed forward of the engine unit 20, and accommodates the crank shaft 34 extending in the vehicle width direction (see Fig. 3). The piston 33 reciprocates within the cylinder 31 by the combustion of fuel supplied from an injector (not shown). The crank mechanism 32 converts the reciprocating movement of the piston 33 into rotational movement of the crank shaft 34.

The transmission mechanism 40 reduces the rotation speed of the crank shaft and transmits the resultant rotation to the axle 4 of the rear wheel 3. In this embodiment, the transmission mechanism 40 includes a continuously variable transmission 41, a driven shaft 45, and an intermediate shaft 46, and these components are accommodated in a transmission case 47 disposed on the left side of the rear wheel 3. A front part 47a of the transmission case 47 is attached to the side of the crank case 30c (see Fig. 3), and the transmission case 47 extends toward the rear of the vehicle body from the front part 47a.

The continuously variable transmission 41 includes a driving pulley 42, a driven pulley 43, and a V-belt 44 wound around the driving pulley 42 and the driven pulley 43. The driving pulley 42 is accommodated in the front part 47a of the transmission case 47. The driving pulley 42 is attached to an end of the crank shaft 34 and rotates with the crank shaft 34. The driven shaft 45 is disposed behind the transmission case 47 at a position away from the axle 4 of the rear wheel 3. The driven pulley 43 engages with the driven shaft 45 in an idling condition for the driven shaft 45. The rotation force of the crank shaft 34 is transmitted to the driven pulley 43 via the driving pulley 42 and the V-belt 44. The radii of the portion of the V-belt 44 wound around the driving pulley 42 and the driven pulley 43 vary according to the revolutions of the crank shaft 34, thereby continuously varying the speed reduction ratio.

The transmission mechanism 40 has a centrifugal clutch (not shown) coaxially with the driven shaft 45. The rotation force transmitted to the driven pulley 43 is further transmitted to the driven shaft 45 via the centrifugal clutch under the condition connected with the driven shaft 45. A gear 45a engages with the driven shaft 45 in such a manner as to interlock with the driven shaft 45. The rotation force transmitted to the drive shaft 45 is further transmitted to the intermediate shaft 46 via a large-diameter gear 46a provided to engage with the gear 45a and interlock with the intermediate shaft 46. The large-diameter gear 46a and a small-diameter gear 46b having a diameter smaller than that of the large-diameter gear 46a engage with the intermediate shaft 46. The rotation force transmitted to the intermediate shaft 46 is further transmitted to the axle 4 via the small-diameter gear 46b and a gear 4a engaging with the small-diameter gear 46b and interlocking with the axle 4.

As illustrated in Fig. 2, the rear arm 21 is a substantially triangular component disposed on the right side of the rear wheel 3, and the front part of the rear arm 21 is attached to the crank case 30c. The rear arm 21 extends toward the rear from its attachment position to the crank case 30c, and the axle 4 is supported by the rear end of the rear arm 21.

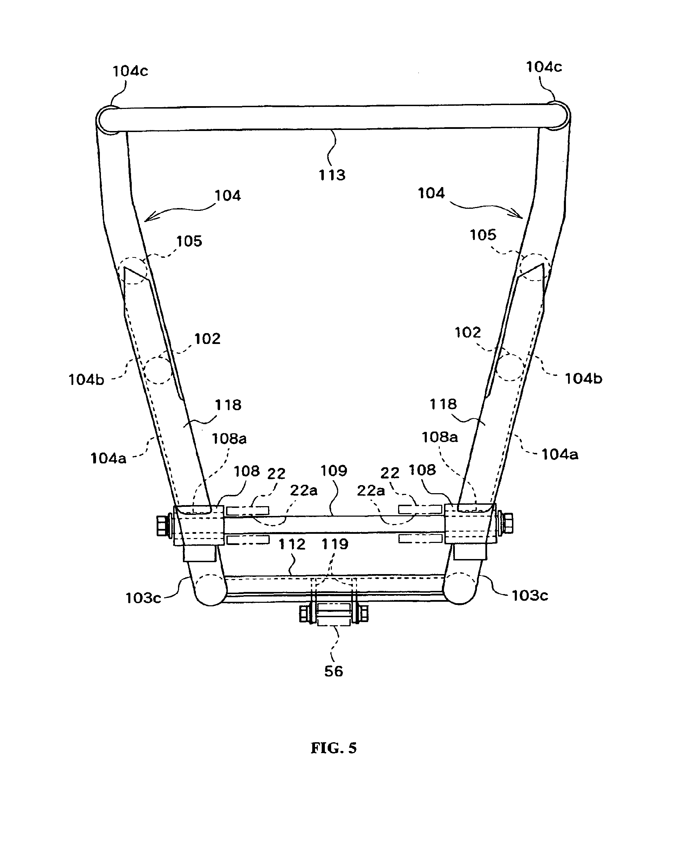

As illustrated in Fig. 3 or 4, the supported members 22, 22 are disposed at the front end of the engine unit 20, forward of the crankshaft 34. In this embodiment, the supported members 22, 22 are so constructed as to project toward the front from a front wall 30d of the crank case 30c (see Fig. 4). The engine unit 20 extends from the supported members 22, 22 toward the rear, and the rear part of the transmission case 47 and the rear end of the rear arm 21 support the axle 4 of the rear wheel 3 such that the axle 4 can rotate. Fig. 5 illustrates the pivot support members 108, 108 and the support plate members 118 as viewed from the rear. An insertion hole 22a extending in the vehicle width direction is formed on each of the supported members 22, and the pivot shaft 109 is inserted into the insertion holes 22a. By this structure, the supported members 22 rotate relative to the pivot shaft 109 in accordance with the variations in the road surface, allowing the engine unit 20 to swing with the fulcrum located at the pivot shaft 109.

As illustrated in Fig. 1, a virtual plane P containing the axle 4 and the pivot shaft 109 to which the supported members 22 are attached is substantially parallel with the road surface. The height of the supported members 22 is determined such that the supported members 22 can swing upward and downward from a horizontal plane (plane in parallel with road surface) containing the axle 4 at the time of running of the vehicle.

As illustrated in Fig. 5, an insertion hole extending in the vehicle width direction is formed on each of the pivot support members 108, and the pivot shaft 109 is inserted into these insertion holes. A cylindrical bushing 108a having an inside diameter corresponding to the outside diameter of the pivot shaft 109 is provided inside each of the insertion holes. The pivot shaft 109 is inserted into the interiors of the bushings 108a, and the pivot support members 108 support the pivot shaft 109 via the bushings 108a.

As illustrated in Fig. 4, the shock absorbing unit attachment member 23 is provided rearward of the shock absorbing unit attachment members 119 of the body frame 10 in such a manner as to project downward from a lower wall 30e of the crank case 30c. The rear end of the shock absorbing unit 50 is attached to the shock absorbing unit attachment member 23.

As discussed above, the engine 30 has the balancer mechanism 36. The balancer mechanism 36 is a mechanism for reducing vibrations of the engine unit 20 caused by the reciprocating movement of the piston 33. As illustrated in Fig. 4, the balancer mechanism 36 has a balancer shaft 37, a gear 37c rotating with the balancer shaft 37, and a balancer weight 37w rotating with the balancer shaft 37. The gear 37c engages with a gear (not shown) rotating with the crank shaft 34, and the balancer shaft 37 rotates in the direction opposite to the rotation of the crank shaft 34 at a speed equivalent to the rotational speed of the crank shaft 34. In this embodiment, the position of the balancer shaft 37 and the position of the balancer weight 37w in the circumferential direction of the balancer shaft 37 are determined such that the vibration of the engine unit 20 is not transmitted from the supported members 22 to the pivot shaft 109 by reducing the vibration of the supported members 22. The details of the balancer mechanism 36 will be described later.

The shock absorbing unit 50 expands and contracts in accordance with road surface variations to reduce rapid swing of the engine unit 20 and the rear wheel 3. As illustrated in Fig. 4, the shock absorbing unit 50 extends between the shock absorbing unit attachment members 119 of the body frame 10 and the shock absorbing unit attachment member 23 formed on the crank case 30c. The shock absorbing unit 50 has a dumper 52, an engine side attachment member 55, and a frame side attachment member 56. The dumper 52 has a case 53 and a rod 54.

A cylinder 53a is provided inside the case 53, and oil or gas is sealed into the cylinder 53a. A piston 53b is attached to the front end of the rod 54. The piston 53b is accommodated in the cylinder 53a. The rod 54 pulls or pushes the piston 53b according to the swing of the engine unit 20. In this embodiment, a coil spring 51 is provided inside the cylinder 53a. The coil spring 51 pushes or biases the piston 53b so as to contract (shorten) the dumper 52.

The engine side attachment member 55 extends toward the rear from the dumper 52. The rear end of the engine side attachment member 55 is attached to the shock absorbing unit attachment member 23 of the engine unit 20 by a bolt 27 in such a manner as to be rotatable relative to the shock absorbing unit attachment member 23.

The frame side attachment member 56 extends toward the front from the damper 52, and the front end of the frame side attachment member 56 is attached to the shock absorbing unit attachment member 119 of the body frame 10 by a bolt 28.

The shock absorbing unit 50 is provided below the pivot shaft 109 in a direction substantially parallel with the road surface. The frame side attachment member 56 is positioned forward of the pivot shaft 109, and the engine side attachment member 55 is positioned rearward of the pivot shaft 109. Thus, the expanding and contracting direction of the shock absorbing unit 50 (direction indicated by an arrow S in Fig. 4) extends in the circumferential or tangential direction of a circle defined around the pivot shaft 109. That is, the direction S is substantially perpendicular to a line T passing the center of the pivot shaft 109 and extending in its radial direction.

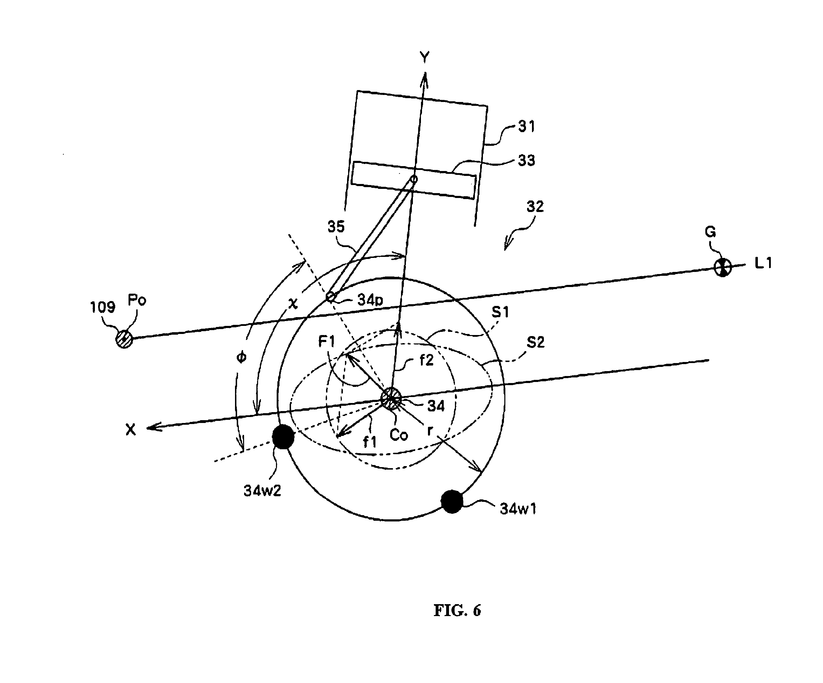

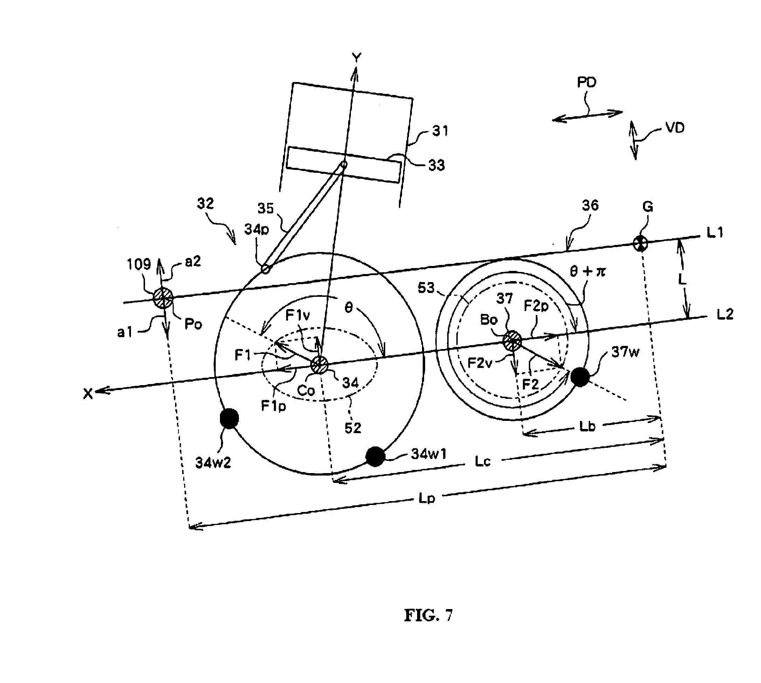

The crank mechanism 32 and the balancer mechanism 36 contained in the engine 30 will now be explained. Figs. 6 and 7 show the positional relationship between the crank mechanism 32 and the balancer mechanism 36. As discussed above, the balancer mechanism 36 has the balancer shaft 37 and the balancer weight 37w. The crank mechanism 32 has the piston 33, the crank shaft 34 and the connecting rod 35. The crank shaft 34 has a counter weight 34w1 provided on the side opposite to a crank pin 34p with the crank shaft 34 interposed therebetween and rotatable with the crank shaft 34. Also, a weight 34w2 is disposed at a position different from the position of the counter weight 34w1 in the circumferential direction of the crank shaft 34 and is rotatable with the crank shaft 34. In Figs. 6 and 7, the counter weight 34w1 and the weight 34w2 are black circular marks for simplifying the present description. Similarly, the balancer weight 37w is a black circular mark in Fig. 7. In this embodiment, it is assumed that the counter weight 34w1, the weight 34w2, and the crank pin 34p are disposed at equal distances from an axial center Co of the crank shaft 34 (at a distance r in Fig. 6) for simplifying the explanation.

In this embodiment, the position of the balancer shaft 37, the position of the balancer weight 37w in the circumferential direction of the balancer shaft 37, the position of the crank shaft 34, and the position of the weight 34w2 in the circumferential direction of the crank shaft 34 are determined such that vibration to be transmitted to the pivot shaft 109 via the supported members 22 can be reduced.

Initially, the position of the weight 34w2 in the circumferential direction of the crank shaft 34 is explained. Centrifugal force generated by the rotations of the counter weight 34w1, the weight 34w2, the crank pin 34p, and the large-end side of the connecting rod 35 (crank shaft 34 side) around the axial center Co of the crank shaft 34 acts on the crank mechanism 32. The centrifugal force produced by combining the centrifugal forces generated by these components is indicated by f1 in Fig. 6. The direction of the centrifugal force f1 rotates in accordance with the phase of the crank shaft 34. In Fig. 6, the locus produced by the vector of the centrifugal force f1 is indicated by a circle S1. Also, inertia force generated by the reciprocating movements of the piston 33 and the small-end side (piston 33 side) of the connecting rod 35 within the cylinder 31 acts on the crank mechanism 32 in an axial direction Y of the cylinder 31. A primary inertia force f2 of this inertia force varies in accordance with the phase of the crank shaft 34. Thus, a resultant force (hereinafter referred to as inertia force F1) of the primary inertia force f2 and the centrifugal force f1 acts on the crank mechanism 32. The direction of the inertia force F1 rotates with the rotation of the crank shaft 34. In Fig. 6, the locus produced by the vector of the inertia force F1 is indicated by an ellipse S2.

According to this embodiment, the mass of the counter weight 34w1 is equivalent to the mass of the rotating portions such as the crank pin 34p and the large-end side of the connecting rod 35. In this case, the direction of the major axis of the ellipse S2 (direction indicated by an arrow X in Fig. 6) is determined according to a ratio k of a mass Mp of the reciprocating portion such as the piston 33 and the small-end of the connecting rod 35 to a mass Mc of the weight 34w2 (hereinafter referred to as mass ratio (k=Mc/Mp) and the position of the weight 34w2 in the circumferential direction of the crank shaft 34. That is, assuming that an angle formed by the axial direction Y of the cylinder 31 and the direction X is χ and that an angle formed by the position of the weight 34w2 and the position of the crank pin 34p is φ, the angle χ is expressed by the following equation as shown in Kikai Sekkei, volume 8, No. 9, pp. 43-44, published by Nikkan Kogyo Shinbun:

$$\chi = \{\tan-1(2k\times\sin\phi)/(1+2k\times\cos\phi)/2 \ldots (1)$$

In this embodiment, the mass Mc of the weight 34w2 and the position of the weight 34w2 (angle φ in Fig. 6) are determined such that the direction X of the major axis of the ellipse S2 extends in parallel with a straight line L1 connecting a center of gravity G of the engine unit 20 and an axial center Po of the pivot shaft 109. While the weight 34w2 and the counter weight 34w1 for controlling the direction of the ellipse S2 are separate components in this embodiment, these components may be formed integrally with each other.

Details of the balancer mechanism 36 will now be described. As illustrated in Fig. 7, the balancer shaft 37 is positioned such that a line L2 connecting an axial center Bo of the balancer shaft 37 and the axial center Co of the crank shaft 34 extends in parallel with the line L1 discussed above. As mentioned above, the balancer weight 37w rotating with the balancer shaft 37 is provided on the balancer shaft 37. Thus, centrifugal force F2 generated by the rotations of the balancer shaft 37 and the balancer weight 37w acts on the balancer mechanism 36. In Fig. 7, the locus produced by the vector of the centrifugal force F2 is indicated by a circle S3. The balancer weight 37w is provided in such a manner as to rotate around the axial center Bo of the balancer shaft 37 in the same direction as that of the inertia force F1. The position of the balancer weight 37w in the circumferential direction of the balancer shaft 37 is determined such that the direction of the centrifugal force F2 is the direction opposite to the direction of the inertia force F1 corresponding to the direction of the major axis and the minor axis of the ellipse S2 discussed above.

The positional relationship between the crank shaft 34 and the balancer shaft 37, and the mass of the balancer weight 37w will now be explained.

As illustrated in Fig. 7, the balancer shaft 37 is disposed away from the crank shaft 34. Thus, a moment of the centrifugal force F2 and the inertia force F1 act on the engine unit 20. The engine unit 20 vibrates by this moment, and acceleration is given to the pivot shaft 109. Also, acceleration generated by the resultant force of the centrifugal force F2 and the inertia force F1 is given to the pivot shaft 109.

According to this example shown herein, the mass of the balancer weight 37w and the positional relationship between the balancer shaft 37 and the crank shaft 34 are determined such that the acceleration generated by the resultant force can be reduced by the acceleration generated by the moment of the centrifugal force F2 and the inertia force F1. More specifically, the mass of the balancer weight 37w is established such that the centrifugal force F2 of the balancer mechanism 36 becomes equivalent to the maximum of the inertia force F1 of the crank mechanism 32. Thus, the radius of the circle S3 is equivalent to the major axis of the ellipse S2 in Fig. 7.

The positional relationship between the crank shaft 34 and the balancer shaft 37 is specifically determined in the following manner. As illustrated in Fig. 7, it is assumed that a distance from the line L1 connecting the center of gravity G of the engine unit 20 and an axial center Po of the pivot shaft 109 to the line L2 connecting the axial center Co of the crank shaft 34 and the axial center Bo of the balancer shaft 37 is L. It is also assumed that a distance from the center of gravity G of the engine unit 20 to the axial center Po of the pivot shaft 109 is Lp. It is further assumed that a distance from a line L3 passing through the center of gravity G and extending in parallel with a direction VD (direction perpendicular to the lines L1 and L2) to the axial center Bo of the balancer shaft 34. It is further assumed that a distance from the line L3 to the axial center Co of the crank shaft 34 is Lc. In this case, the positions of the crank shaft 34 and the balancer shaft 37 are determined such that the respective distances discussed above satisfy the following equation (2):

$$A\times\{M\times Lp(Lb+Lc)+2I\} = M\times Lp\times Lc+I \ldots (2)$$

In the equation (2), M is the mass of the engine unit 20, and I is the moment of inertia of the engine unit 20 with respect to a line passing the center of gravity G and extending in parallel with the vehicle width direction. The value A is a ratio of the major axis to the minor axis of the ellipse S2 produced by the vector of the inertia force F1 of the crank mechanism 32 (major axis: minor axis = A: (1-A)). The value A is expressed by the following equation (3) using the angle $\chi$ formed by the major axis direction X of the ellipse S2 discussed above and the axial direction S of the cylinder 31, the angle $\phi$ formed by the weight 34w2 and the crank pin 34p, and the mass ratio k, as shown in Kikai Sekkei, volume 8, No. 9, pp. 43-44, published by Nikkan Kogyo Shinbun, for example.

$$A=k\times\sin(\phi-\chi)/\sin\chi \quad ... \quad (3)$$

Details of equation (2) will now be explained.

Initially, a component F2v in a direction VD and a component F2p in a direction PD (direction in parallel with line L2) contained in the centrifugal force F2 of the balancer mechanism 36, and a component F1v in the direction VD and a component F1p in the direction PD contained in the inertia force F1 of the crank mechanism 32 are calculated.

When the maximum of the primary inertial force acting on the reciprocating portion (mass m) in the crank mechanism 32 such as the piston 33 is F ($F=mr\omega2$, r=distance from axial center Co of crank shaft 34 to crank pin 34p, $\omega$=angular speed of crank shaft 34), the radius of the major axis of the ellipse S2 (maximum of inertia force F1 of crank mechanism 32) is A$\times$F as shown in Kikai Sekkei, volume 8, No. 9, pp. 43-44, published by Nikkan Kogyo Shinbun, for example. In this case, the radius of the minor axis (minimum of inertia force F1) is (1-A) $\times$F. As illustrated in Fig. 7, when the angle of the inertia force F1 of the crank mechanism 32 to the line L2 is $\theta$, the angle of the centrifugal force F2 of the balancer mechanism 36 is $\pi+\theta$. Thus, the component F1v in the direction VD contained in the inertia force F1 of the crank shaft 34 is (1-A)$\times$Fsin$\theta$. The component F1p in the direction PD contained in the inertia force F1 of the crank shaft 34 is AxFcos$\theta$. The mass of the balancer weight 37w is established such that the centrifugal force F2 of the balancer mechanism 36 is equivalent to the maximum of the inertia force F1 of the crank mechanism 32. Thus, the component F2v in the direction VD contained in the centrifugal force F2 of the balancer mechanism 36 is A$\times$Fsin($\pi+\theta$), and the component F2p in the direction PD is A$\times$Fcos($\pi+\theta$).

Then, a component in the direction VD (a1 in Fig. 7) contained in the acceleration of the pivot shaft 109 generated by the moment of the centrifugal force F2 and the inertia force F1 is calculated. A moment N of the inertia force F1 and the centrifugal force F2 around the center of gravity G is expressed by the following equation (4):

$$N=F1p\times L+F2p\times L+F1v\times Lc+F2v\times Lb$$

$$=A\times F\cos\theta\times L+A\times F\cos(\pi+\theta)\times L+(1-A)\times F\sin\theta\times Lc+A\times F\sin(\pi+\theta)\times Lb \quad ....$$

$$(4)$$

Since cos($\pi+\theta$)=-cos$\theta$ and sin($\pi+\theta$)=-sin$\theta$, the equation (4) can be expressed by the following equation (5):

$$N=(1-A)\times F\sin\theta\times Lc-A\times F\sin\theta\times Lb \quad .... \quad (5)$$

When the angular acceleration generated by the moment N around the center of gravity G is $\beta$ and the acceleration at the axial center Po in the direction VD generated by the moment N is a1, the acceleration a1 in the direction VD and the angular acceleration $\beta$ are expressed by the following equations (6) and (7):

$$a1=Lp\times\beta \quad .... \quad (6)$$

$$\beta=N/I \quad .... \quad (7)$$

where I is the moment of inertia of the engine unit 20 with respect to the line passing through the center of gravity G and extending in parallel with the vehicle width direction as discussed above.

Based on the equation (5), the equation (7) can be expressed by the following equation (8):

$$\beta=\{(1-A)\times Fsin\theta\times Lc-A\times Fsin\theta\times Lb\}/I \quad .. \quad (8)$$

Based on the equations (6) and (8), the acceleration a1 can be expressed by the following equation (9):

$$a1=Lp\times\{(1-A)\times Fsin\theta\times Lc-A\times Fsin\theta\times Lb\}/I \quad ... \quad (9)$$

An acceleration a2 at the axial center Po in the direction VD generated by the resultant force of the inertia force F1 and the centrifugal force F2 is expressed by the following equation (10):

$$a2=(F1v+F2v)/M$$

$$=\{(1-A)\times Fsin\theta+A\times Fsin(\pi+\theta)\}/M$$

$$=\{(1-A)\times Fsin\theta-A\times Fsin\theta\}/M$$

$$=(1-2A)\times Fsin\theta/M \quad .... \quad (10)$$

where M is the mass of the engine unit 20 as discussed above.

When the acceleration a1 at the axial center Po in the direction VD generated by the moment N and the acceleration a2 at the axial center Po in the direction VD generated by the resultant force of the inertia force F1 and the centrifugal force F2 cancel each other, that is, when a1+a2=0, the axial center Po of the pivot shaft 109 becomes a momentary rotation center of the engine unit 20, thereby reducing vibration of the pivot shaft 109 in the direction VD. The sum of the acceleration a1 and the acceleration a2 is expressed by the following equation based on the equations (9) and (10):

$$a1+a2=Lp\times\{(1-A)\times Fsin\theta\times Lc-A\times Fsin\theta\times Lb\}/I+(1-2A)\times Fsin\theta/M=0$$

This equation can be arranged in the following manner:

$$Fsin\theta[Lp\times\{(1-A)\times Lc-A\times Lb\}/I+(1-2A)/M]=0$$

Since F≠0, the following equation can be obtained:

$$sin\theta[Lp\times\{(1-A)\times Lc-A\times Lb\}/I+(1-2A)/M]=0$$

In this case, the following (11) holds when sinθ≠0 (θ≠0, in case of π):

$$Lp\times\{(1-A)\times Lc-A\times Lb\}/I+(1-2A)/M=0 \quad .. \quad (11)$$

By arranging the equation (11), the relationship between the ratio A of the major axis to the minor axis of the ellipse S2 produced by the vector of the inertia force F1 acting on the crank mechanism 32 and the distances Lp, Lc and Lb can be expressed by the following equation equivalent to the equation (2) shown above:

$$A \times \{M \times Lp(Lb+Lc)+2I\}=M \times Lp \times Lc+I$$

When $\sin\theta=0$ ($\theta=0$, in case of $\pi$), each of the accelerators a1 and a2 is zero based on the equations (9) and (10). Thus, the equation a1+a2=0 is satisfied. This is the explanation of the equation (2) which determines the positional relationship between the crank shaft 34, the balancer shaft 37, and the center of gravity G.

The acceleration at the axial center Po in the direction PD is zero. That is, since the lines L1 and L2 are parallel with each other, an acceleration a3 at the axial center Po in the direction PD generated by the moment N is zero.

An acceleration a4 at the axial center Po in the direction PD generated by the resultant force of the inertia force F1 and the centrifugal force F2 can be expressed by the following equation (13):

$$a4=(F1p+F2p)/M$$
$$=\{A \times F\cos\theta+A \times F\cos(\pi+\theta)\}/M$$
$$=\{A \times F\cos\theta-A \times F\cos\theta\}/M$$
$$=0 \quad \ldots \quad (13)$$

As a result, the equation a3+a4=0 is satisfied. Since the acceleration at the axial center Po generated in the direction PD is zero, vibration at the axial center Po of the pivot shaft 109 in the direction PD is reduced.

According to the motorcycle 1 described above, the supported members 22 supported by the pivot shaft 109 project toward the front from the front wall 30d of the crank case 30c and is disposed at the front end portion of the engine unit 20. In this case, the distance from the pivot shaft 109 to the axle 4 of the rear wheel 3 increases. Thus, fluctuation in the wheelbase is reduced, and the running stability of the motorcycle is enhanced.

According to a typical unit swing type motorcycle, an engine unit is supported by a body frame via a vibration-preventing suspension member which prevents transmission of vibration generated by the engine unit to the body frame. In this structure, the suspension member needs to be extended toward the rear when the engine unit is disposed at a backward position with respect to the body frame to increase the wheelbase without changing the size of the body frame or the like, and this structure is complicated. According to the motorcycle 1 described above, however, the supported members 22 of the engine unit 20 are attached to the pivot shaft 109 without interposing such a suspension member therebetween. Thus, the position of the engine unit 20 with respect to the body frame 10 can be easily controlled and the wheelbase can be appropriately determined by increasing the projection of the supported members 22 toward the front, for example. When the engine unit is supported by the body frame via the vibration-preventing suspension member, the engine unit does not necessarily move with the body frame as one body. In this case, the rider feels that acceleration of the vehicle starts with delay from the increase in the rotation speed of the rear wheel, and thus cannot sometimes obtain preferable operational feedback. According to the motorcycle 1, however, the engine unit 20 is attached to the pivot shaft 109 without interposing the suspension member therebetween. Thus, the rider can feel the start of acceleration of the vehicle without delay from the increase in the rotation speed of the rear wheel 3, which improves operational feedback of the rider.

Moreover, the cylinder block 30a and the cylinder head 30b are positioned such that the axial direction of the cylinder 31 extends in the up-down direction, and the shock absorbing unit 50 is disposed below the engine unit 20. This structure allows effective use of the space below the seat 9. For example, the storage case 11 can be provided below the seat 9 as discussed above. Furthermore, the engine 30 has the balancer mechanism 36. Thus, vibration generated by reciprocating movement of the piston 33 within the cylinder 31 in the up-down direction is not transmitted to the body frame 10 via the supported members 22 and the pivot shaft 109.

The invention is not limited to the example of the motorcycle 1 described above, but may be practiced otherwise with various modifications. For example, the motorcycle 1 described in the example shown has an engine 30 driven by combustion of fuel as a power source of the vehicle. However, the power source is not limited to such an engine and may be a hybrid engine which combines an electric motor driven by supply of electric power and an engine.

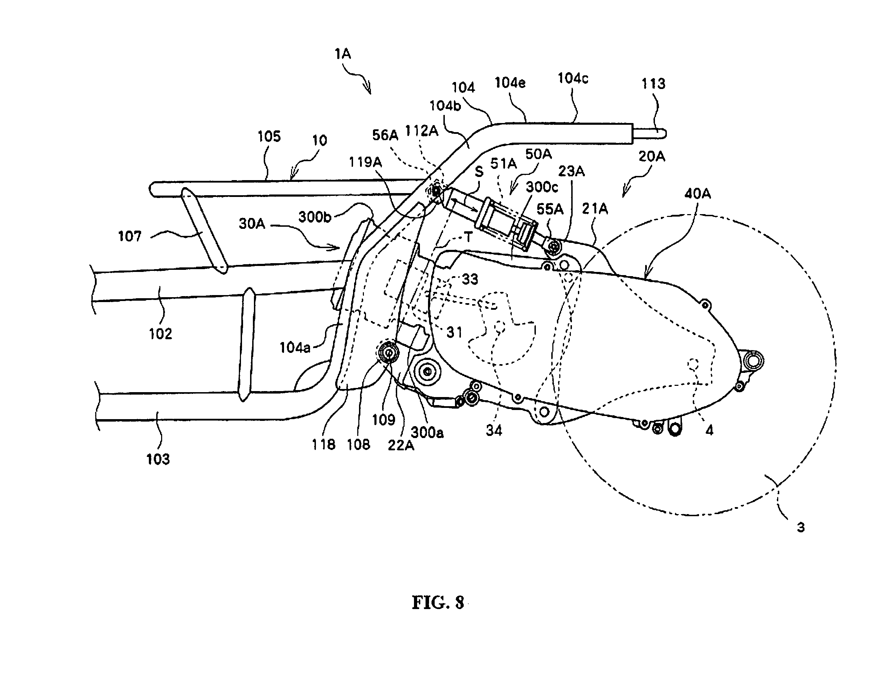

While the cylinder block 30a and the cylinder head 30b are disposed such that the axial direction of the cylinder 31 extends in the up-down direction in the motorcycle 1 described above, the cylinder block and the cylinder head may be positioned such that the axial direction of the cylinder extends in the front-rear direction of the vehicle body. Fig. 8 is a side view illustrating a body frame 10A and an engine unit 20A included in a motorcycle 1A in this example. In this figure, the same reference numbers are given to the same parts included in the motorcycle 1, and for brevity a further explanation of these parts is not provided.

As illustrated in the figure, the motorcycle 1A includes a shock absorbing unit 50A as well as the engine unit 20A. The engine unit 20A has an engine 30A, a transmission mechanism 40A, and a rear arm 21A. The engine 30A has a cylinder block 300a, a cylinder head 300b, and a crank case 300c. The cylinder block 300a contains the cylinder 31. The cylinder block 300a is inclined toward the front such that the axial direction of the cylinder 31 extends substantially in the front-rear direction of the vehicle. The cylinder 31 contains the piston 33.

The crank case 300c is disposed rearward of the cylinder block 300a. The crank case 300c has supported members 22A projecting toward the front from the lower wall of the crank case 300c. Each end of the supported members 22A is positioned below the cylinder block 300a, and attached to the pivot shaft 109 supported by the pivot support member 108.

The crank case 300c contains the crank shaft 34 extending in the vehicle width direction. Similarly to the above example, the supported members 22A are disposed forward of the crank shaft 34 in the motorcycle 1A.

A shock absorbing member 23A is provided at the upper end of the front part of the rear arm 21A. An engine side attachment member 55A provided on the shock absorbing unit 50A is attached to the shock absorbing attachment member 23A such that the engine side attachment member 55A can rotate relative to the shock absorbing unit attachment member 23A. The shock absorbing unit 50A is disposed above the cylinder block 300a and the crank case 300c. The shock absorbing unit 50A is disposed such that its expanding and contracting direction (direction indicated by S in the figure) extends substantially in the front-rear direction of the vehicle and in the circumferential direction of the pivot shaft 109. That is, an expanding direction S of the shock absorbing unit 50A is perpendicular to a line T passing the axial center of the pivot shaft 109 and extending in the radial direction.

According to the motorcycle 1A, a shock absorbing unit support member 112A extends between the left and right inclined frame portions 104b, and a pair of plate-shaped shock absorbing unit attachment members 119A contact the shock absorbing unit support member 112A. A frame side attachment member 56A of the shock absorbing unit 50A is attached to the shock absorbing unit attachment members 119A. The frame side attachment member 56A is positioned forward of the pivot shaft 109 with respect to the vehicle body, and the engine side attachment member 55A is positioned forward of the pivot shaft 109 with respect to the vehicle body. The shock absorbing unit 50A has a coil spring 51A which generates force in the direction for expanding the distance between the frame side attachment member 56A and the engine side attachment member 55A.

Similarly to the above example, the supported members 22A are positioned forward of the crank shaft 34 in the motorcycle 1A. This structure allows the distance between the pivot shaft 109 and the axle 4 of the rear wheel 3 to be enlarged compared with the structure where a central area and its vicinity near the center of gravity of the engine unit 20A are suspended by the body frame 10. Moreover, since the cylinder block 300a and the cylinder head 300c are disposed such that the axial direction of the cylinder 31 extends in the front-rear direction of the vehicle body, the space above the engine unit 20A can be effectively utilized.

Description of Reference Numerals and Signs

| 1, 1A | motorcycle |
|---|---|
| 2 | front wheel |
| 3 | rear wheel |
| 4 | axle |
| 7 | front fork |
| 8 | handle |
| 9 | seat |
| 10 | body frame |
| 11 | storage case |
| 20, 20A | engine unit |
| 22, 22A | supported member |
| 23, 23A | shock absorbing unit attachment member |
| 30, 30A | engine |
| 31 | cylinder |
| 32 | crank mechanism |
| 33 | piston |

| 34 | crank shaft |
|---|---|
| 35 | connecting rod |
| 36 | balancer mechanism |
| 37 | balancer shaft |
| 40 | transmission mechanism |
| 41 | continuously variable transmission |
| 42 | driving pulley |
| 43 | driven pulley |
| 44 | V-belt |
| 45 | driven shaft |
| 46 | intermediate shaft |
| 47 | transmission case |
| 50, 50A | shock absorbing unit |
| 51, 51A | coil spring |
| 52 | dumper |
| 53 | case |
| 54 | rod |
| 55, 55A | engine side attachment member |
| 56, 56A | frame side attachment member |
| 101 | head pipe |
| 102 | upper frame portion |
| 103 | lower frame portion |
| 104 | rear frame portion |
| 105 | seat stay |
| 107 | support member |
| 108 | pivot support member |
| 109 | pivot shaft |
| 111 | front cross portion |
| 112, 112A | shock absorbing unit support member |
| 113 | rear cross portion |
| 115 | reinforcement plate |
| 116a, 116b | support member |
| 119, 119A | shock absorbing unit attachment member |

## Claims

1. A vehicle (1), comprising:

   a body frame (10);
   a pivot shaft (109) supported by the body frame (10); and
   an engine unit (20) coupled to a rear wheel (3) and capable of swinging upward and downward about the pivot shaft (109),
   wherein the engine unit (20) comprises a crank shaft (34) disposed in a front part thereof and a supported member (22) formed on the engine unit (20), the supported member (22) being disposed forward of the crank shaft (34) and attached to the pivot shaft (109), said engine unit (20) extending rearward from the supported member (22), and an axle (4) of the rear wheel (3) being supported by the rear part of the engine unit (20).

2. The vehicle (1) according to claim 1, wherein the rear wheel (3) is disposed in a rear part of the vehicle body (10).

3. The vehicle (1) according to claim 1 or 2, wherein the rear wheel (3) is coupled to the engine unit (20) via a transmission assembly (40) adapted to transmit rotational force of the crank shaft (34) to the rear wheel (3).

4. The vehicle (1) according to claim 1, 2 or 3, wherein the supported member (22) is positioned at the front end of the engine unit (20).

5. The vehicle (1) according to any preceding claim, wherein the supported member (22) attached to the pivot shaft (109) is disposed at a level sufficient for swinging upward and downward from a horizontal plane containing the axle (4) at the time of running of the vehicle (1).

6.  The vehicle (1) according to any preceding claim, further comprising a shock absorbing unit adapted to reduce vibration of the engine unit (20), wherein the shock absorbing unit is disposed in such a position as to expand and contract in the circumferential direction of a circle defined around the pivot shaft (109).

7.  The vehicle (1) according to any preceding claim, provided in the form of a straddle-type vehicle.


**Patentansprüche**

1.  Fahrzeug (1), das aufweist:

    einen Karosserieaufbau (10);
    eine Drehwelle (109), die vom Karosserieaufbau (10) getragen wird; und
    eine Motoreinheit (20), die mit einem Hinterrad (3) verbunden und in der Lage ist, um die Drehwelle (109) nach oben und nach unten zu schwenken,
    wobei die Motoreinheit (20) eine Kurbelwelle (34), die in einem vorderen Teil davon angeordnet ist, und ein Stützelement (22) aufweist, das an der Motoreinheit (20) ausgebildet ist, wobei das Stützelement (22) nach vom von der Kurbelwelle (34) angeordnet und an der Drehwelle (109) befestigt ist, wobei sich die Motoreinheit (20) nach hinten vom Stützelement (22) erstreckt, und wobei eine Achse (4) des Hinterrades (3) durch den hinteren Teil der Motoreinheit (20) getragen wird.

2.  Fahrzeug (1) nach Anspruch 1, bei dem das Hinterrad (3) in einem hinteren Teil der Fahrzeugkarosserie (10) angeordnet ist.

3.  Fahrzeug nach (1) Anspruch 1 oder 2, bei dem das Hinterrad (3) mit der Motoreinheit (20) mittels einer Getriebeanordnung (40) verbunden ist, die ausgebildet ist, um eine Rotationskraft der Kurbelwelle (34) auf das Hinterrad (3) zu übertragen.

4.  Fahrzeug (1) nach Anspruch 1, 2 oder 3, bei dem das Stützelement (22) am vorderen Ende der Motoreinheit (20) positioniert ist.

5.  Fahrzeug (1) nach einem der vorhergehenden Ansprüche, bei dem das Stützelement (22), das an der Drehwelle (109) befestigt ist, auf einem Niveau angeordnet ist, das für ein Schwingen nach oben und nach unten aus einer horizontalen Ebene heraus ausreichend ist, die die Achse (4) zum Zeitpunkt des Fahrens des Fahrzeuges (1) enthält.

6.  Fahrzeug (1) nach einem der vorhergehenden Ansprüche, das außerdem eine stoßdämpfende Einheit aufweist, die ausgebildet ist, um die Vibrationen der Motoreinheit (20) zu verringern, wobei die stoßdämpfende Einheit in einer derartigen Position angeordnet ist, um in der Umfangsrichtung eines Kreises zu expandieren und sich zusammenzuziehen, der um die Drehwelle (109) definiert wird.

7.  Fahrzeug (1) nach einem der vorhergehenden Ansprüche, das in der Form eines Grätschsitz-Fahrzeuges bereitgestellt wird.


**Revendications**

1.  Véhicule (1), comprenant:

    une ossature de carrosserie (10) ;
    un arbre de pivotement (109) supporté par l'ossature de la carrosserie (10) ; et
    une unité de moteur (20), accouplée à une roue arrière (3) et pouvant pivoter vers le haut et vers le bas autour de l'arbre de pivotement (109) ;
    dans lequel l'unité de moteur (20) comprend un vilebrequin (34), agencé dans sa partie avant, et un élément supporté (22) formé sur l'unité de moteur (20), l'élément supporté (22) étant agencé devant le vilebrequin (34) et étant fixé sur l'arbre de pivotement (109), ladite unité de moteur (20) s'étendant vers l'arrière de l'élément supporté (22), et un essieu (4) de la roue arrière (3) étant supporté par la partie arrière de l'unité de moteur (20).

**2.** Véhicule (1) selon la revendication 1, dans lequel la roue arrière (3) est agencée dans une partie arrière de la carrosserie du véhicule (10).

**3.** Véhicule (1) selon les revendications 1 ou 2, dans lequel la roue arrière (3) est accouplée à l'unité de moteur (20) par l'intermédiaire d'un assemblage de transmission (40), adapté pour transmettre une force de rotation du vilebrequin (34) vers la roue arrière (3).

**4.** Véhicule (1) selon les revendications 1, 2 ou 3, dans lequel l'élément supporté (22) est positionné au niveau de l'extrémité avant de l'unité de moteur (20).

**5.** Véhicule (1) selon l'une quelconque des revendications précédentes, dans lequel l'élément supporté (22) fixé sur l'arbre de pivotement (109) est agencé à un niveau suffisant pour permettre son pivotement vers le haut et vers le bas à partir d'un plan horizontal contenant l'essieu (4) lors du roulement du véhicule (1).

**6.** Véhicule (1) selon l'une quelconque des revendications précédentes, comprenant en outre une unité à absorption des chocs adaptée pour réduire les vibrations de l'unité de moteur (20), dans lequel l'unité à absorption des chocs est agencée dans une position telle à se dilater et à se contracter dans la direction circonférentielle d'un cercle défini autour de l'arbre de pivotement (109).

**7.** Véhicule (1) selon l'une quelconque des revendications précédentes, fourni sous forme d'un véhicule du type à chevauchement.

**FIG. 1**

FIG. 2

FIG. 3

FIG. 4

**FIG. 5**

FIG. 6

EP 1 950 132 B1

FIG. 7

**FIG. 8**

EP 1 950 132 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003312578 A
- EP 1584549 A
- US 4733639 A
- FR 2722756
- EP 0262912 A
- US 4800980 A
- US 4460057 A

**Non-patent literature cited in the description**

- Kikai Sekkei. Nikkan Kogyo Shinbun, vol. 8, 43-44